# EUROPÄISCHE PATENTSCHRIFT

(11) **EP 1 577 404 B1**
(45) Veröffentlichungstag und Bekanntmachung des Hinweises auf die Patenterteilung: **25.11.2009**
(21) Anmeldenummer: 04026628.0
(22) Anmeldetag: 18.08.2000
(51) Int. Cl.: C21D 8/10, C21D 9/08, B60G 21/05, C23C 8/10, B60G 21/055

(54) **Verfahren zur Herstellung eines biegesteifen, torsionsweichen Rohrprofils**
Process for manufacturing a tubular profile resistant to bending and flexible in torsion
Procédé pour la fabrication d'un profilé tubulaire rigide en flexion et déformable en torsion

(30) Priorität: 02.09.1999 DE 19941993
(43) Veröffentlichungstag der Anmeldung: 21.09.2005
(62) Teilanmeldung aus: 00117803.7
(73) Patentinhaber: BENTELER AG, D-33104 Paderborn (DE)
(72) Erfinder: Christophlimke, Wigbert, 33758 Schloss Holte-Stukenbrock (DE); Streubel, Wolfgang, 32756 Detmold (DE)
(74) Vertreter: Ksoll, Peter

(56) Entgegenhaltungen:
- EP-A- 0 752 332
- US-A- 4 173 501
- PATENT ABSTRACTS OF JAPAN Bd. 1996, Nr. 03, 29. März 1996 (1996-03-29) & JP 07 292412 A (NIPPON STEEL CORP;OTHERS: 02), 7. November 1995 (1995-11-07)
- PATENT ABSTRACTS OF JAPAN Bd. 1996, Nr. 07, 31. Juli 1996 (1996-07-31) & JP 08 060294 A (KOBE STEEL LTD), 5. März 1996 (1996-03-05)
- PATENT ABSTRACTS OF JAPAN Bd. 017, Nr. 309 (C-1070), 14. Juni 1993 (1993-06-14) & JP 05 025546 A (NIPPON STEEL CORP), 2. Februar 1993 (1993-02-02)

## Beschreibung

Es sind diverse Vorschläge bekannt geworden, wie der Querträger einer Verbundlenkerhinterachse eines Personenkraftwagens ausgestaltet werden soll, um diesen auf der einen Seite biegesteif, auf der anderen Seite aber auch ausreichend torsionsweich zu gestalten. Dazu zählen beispielsweise die Vorschläge der EP 0 249 537 B1, der EP 0 681 932 A2, der EP 0 752 332 B1, des DE-GM's 297 20 207 und der US-PS 2,069,911.

Allen diesen Querträgern ist jedoch die Eigenschaft zu eigen, dass ihre Fertigung insgesamt aufwendig ist und daher die Gestehungskosten im Rahmen einer kompletten Verbundlenkerhinterachse hoch sind.

Der Erfindung liegt ausgehend vom Stand der Technik die Aufgabe zugrunde, ein Verfahren zur Herstellung eines biegesteifen torsionsweichen Rohrprofils als Querträger für eine Verbundlenkerhinterachse eines Personenkraftwagens vorzuschlagen, das nicht nur ein erhöhtes wirtschaftliches Ausbringen gewährleistet, sondern auch im Hinblick auf die jeweils gestellten Anforderungen erlaubt, die einzelnen Verfahrensparameter weitgehend variabel zu gestalten.

Die Lösung dieser Aufgabe besteht in den Merkmalen des Anspruchs 1.

Im Rahmen der Erfindung gelangt ein Einsatzstahl zur Verwendung. Ein Rohr aus einem Einsatzstahl wird hierbei zunächst im mittleren Längenabschnitt durch eine U-förmige Kaltverformung torsionsweich gestaltet. Die Endabschnitte des Rohrprofils sind hingegen torsionssteif. Sie können verschiedenartig ausgebildete Querschnitte aufweisen.

Nach der Kaltverformung wird das derart gestaltete Rohrprofil in den Übergangsabschnitten zwischen dem U-förmig umgeformten mittleren Längenabschnitt und den torsionssteifen Endabschnitten im Zuge einer Warmbehandlung mit Aufkohlung der Randschichten mit anschließendem Abschrecken einer Randschichthärtung unterworfen. Hiermit wird sichergestellt, dass ein kalt umgeformtes Rohrprofil als Querträger im Rahmen der fertigen Verbundlenkerhinterachse eine hohe Dauerfestigkeit unter dynamischer Belastung aufweist.

Nach der Warmbehandlung erfolgt eine äußere Oberflächenverfestigung. Danach wird das Rohrprofil der Weiterkonfiguration zur Fertigstellung einer Verbundlenkerhinterachse zugeführt.

Eine bevorzugte Werkstoffqualität zur Ausbildung eines biegesteifen torsionsweichen Rohrprofils wird nach Anspruch 2 in C 15 erblickt.

Schließlich ist es noch von Vorteil, wenn die Oberflächenverfestigung der warm behandelten Übergangsabschnitte des Rohrprofils gemäß Anspruch 3 mit Kugel-, insbesondere mit Stahlkugelbestrahlung, erfolgt.

Die Erfindung ist nachfolgend anhand eines in den Zeichnungen dargestellten Ausführungsbeispiels näher erläutert. Es zeigen:
- Figur 1: in der Draufsicht ein Rohrprofil als Querträger für eine Verbundlenkerhinterachse eines Personenkraftwagens und
- Figuren 2 bis 5: diverse Querschnitte durch das Rohrprofil der Figur 1 entlang der Linien II-II, III-III, IV-IV und V-V.

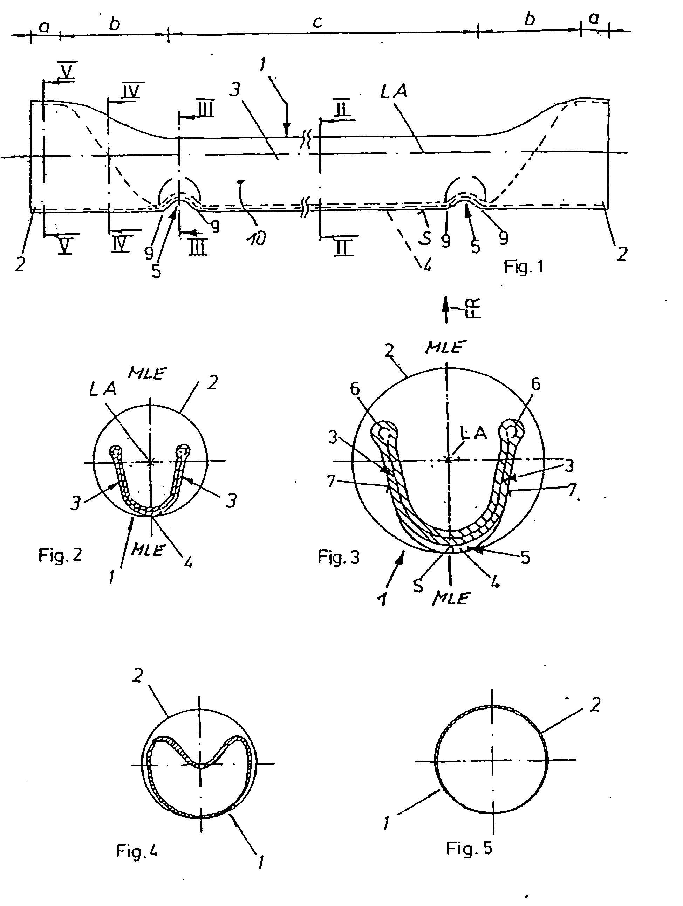

In der Figur 1 ist mit 1 ein Rohrprofil als Querträger für eine ansonsten nicht näher veranschaulichte Verbundlenkerhinterachse eines Personenkraftwagens bezeichnet. Das Rohrprofil 1 ist aus einem ursprünglich runden Rohr (Figur 5) hergestellt, das aus einem Einsatzstahl der Werkstoffqualität C15 besteht.

Durch spanlose Kaltumformung wird der Querschnitt des Rohrprofils 1 in den Endabschnitten a aufrechterhalten. Dieser kreisrunde Querschnitt an den Enden 2 des Rohrprofils 1 in den Endabschnitten a geht jedoch in den Übergangsabschnitten b kontinuierlich in einen U-förmigen doppelwandigen Querschnitt über, der sich über den mittleren Längenabschnitt c des Rohrprofils 1 erstreckt (Figuren 1 bis 5).

Unter der Annahme, dass das Rohrprofil 1 gemäß Figur 1 in der Draufsicht, das heißt in der Einbaulage im Personenkraftwagen dargestellt ist, erstrecken sich die Schenkel 3 des mittleren U-förmigen Längenabschnitts c (Figuren 2 und 3) von einem bogenförmigen Steg 4 aus unter leichter Divergenz bezüglich der durch die Längsachse LA verlaufenden horizontalen Mittellängsebene MLE des Rohrprofils 1 in Fahrtrichtung FR.

Das Rohrprofil 1 ist endseitig des mittleren U-förmigen Längenabschnitts c mit sich in Querrichtung des Rohrprofils 1 erstreckenden sickenartigen Einprägungen 5 versehen. Die Figur 3 zeigt hierbei, dass die Einprägungen 5 ihre größte Tiefe am in der horizontalen Mittellängsebene MLE liegenden Scheitel S des U-förmigen Längenabschnitts c aufweisen. Ihre Tiefe verringert sich in Richtung auf die freien Enden 6 der Schenkel 3, bis sie gleichmäßig in die äußere Oberfläche 7 der Schenkel 3 einlaufen. Im Längsschnitt gesehen haben die Einprägungen 5 mithin eine sichelförmige Konfiguration.

Die Ränder 9 der Einprägungen 5 sind abgerundet.

Nach dem Kaltumformen eines kreisrunden Rohrs aus einem Einsatzstahl der Werkstoffqualität C15 wird das dann vorliegende Rohrprofil 1 gemäß den Figuren 1 bis 5 in den Übergangsabschnitten b im Zuge einer Warmbehandlung durch Aufkohlung der Randschicht des Rohrprofils 1 mit anschließendem Abschrecken einer Randschichthärtung unterworfen. Danach wird das Rohrprofil 1 hinsichtlich seiner äußeren Oberfläche 10 mit Stahlkugeln bestrahlt und schließlich der Weiterkonfiguration zur Fertigstellung einer Verbundlenkerhinterachse zugeführt.

### Bezugszeichen:

- 1 -: Rohrprofil
- 2 -: Enden v. 1
- 3 -: Schenkel v. c
- 4 -: Steg v. c
- 5 -: Einprägungen an 1
- 6 -: Enden v. 3
- 7 -: äußere Oberfläche v. 3
- 8 -: innere Oberfläche v. 3
- 9 -: Ränder v. 5
- 10-: Oberfläche v. 1

- a -: Endabschnitte v. 1
- b -: Übergangsabschnitte v. 1
- c -: mittlere Längenabschnitt v. 1
- FR -: Fahrtrichtung
- LA -: Längsachse v. 1
- MLE -: Mittellängsebene v. 1
- S -: Scheitel v. 1

## Patentansprüche

1. Verfahren zur Herstellung eines biegesteifen torsionsweichen Rohrprofils (1) als Querträger für eine Verbundlenkerhinterachse eines Personenkraftwagens, bei welchern ein Rohr aus einem Einsatzstahl unter Sicherstellung torsionssteifer Endabschnitte (a) zunächst im mittleren Längenabschnitt (c) mittels einer U-förmigen Kaltverformung torsionsweich gestaltet wird, worauf das derart gestaltete Rohrprofil (1) in den Übergangsabschnitten (b) zwischen dem U-förmig umgeformten mittleren Längenabschnitt (c) und den torsionssteifen Endabschnitten (a) im Zuge einer Warmbehandlung mit Aufkohlung der Randschichten sowie anschließendem Abschrecken einer Randschichthärtung unterworfen und anschließend wenigstens einer äußeren Oberflächenverfestigung ausgesetzt wird, und dass das Rohrprofil (1) letztlich der Weiterkonfiguration zur Fertigstellung einer Verbundlenkerhinterachse zugeführt wird.

2. Verfahren nach Anspruch 1, bei welchem zur Herstellung des Rohrprofils (1) als Querträger ein Rohr mit der Werkstoffqualität C15 bereitgestellt wird.

3. Verfahren nach Anspruch 1 oder 2, bei welchem die warm behandelten Übergangsabschnitte (b) mit Kugeln bestrahlt, insbesondere mit Stahlkugeln an der äußeren Oberfläche (10) verfestigt, werden.

## Claims

1. A process for manufacturing a tubular profile (1) resistant to bending and flexible in torsion as a cross-member for a twist beam rear axle of a private motor vehicle, wherein a tube consisting of a case-hardening steel is first made flexible in torsion in the central longitudinal portion (c) by U-shaped cold forming, while ensuring that the end portions (a) are resistant to torsion, whereupon the tubular profile (1) thus made is subjected to surface hardening in the transitional sections (b) between the U-shaped formed central longitudinal portions (c) and the torsion-resistant end portions (a), in the course of a heat treatment with carburisation of the surface layers followed by quenching, and is then exposed to at least one outer surface hardening, and that the tubular profile (1) is finally sent for further configuration to complete a twist beam rear axle.

2. Process according to claim 1, in which a tube of material quality C15 is provided to produce the tubular profile (1) as cross-member.

3. Process according to claim 1 or 2, in which the heat-treated transitional sections (b) are shot-blasted, in particular hardened with steel shot on the outer surface (10).

## Revendications

1. Procédé pour la fabrication d'un profilé tubulaire rigide en flexion et déformable en torsion (1) adapté à un support transversal pour un essieu arrière à bras de suspension longitudinaux combinés d'une automobile, dans lequel un tube en acier cémenté est tout d'abord réalisé de manière déformable en torsion dans un tronçon longitudinal médian (c) au moyen d'une déformation à froid en forme de U tout en ménageant des tronçons terminaux (a) rigides en torsion, suite à quoi le profilé tubulaire (1) réalisé de cette manière est soumis, dans les tronçons de transition (b) entre le tronçon longitudinal médian (c) mis sous la forme d'un U et les tronçons terminaux (a) rigides en torsion, à un durcissement de la couche superficielle au cours d'un traitement thermique avec carburation des couches superficielles et trempe successive, et est soumis ensuite au moins à une consolidation de surface extérieure, et en ce que le profilé tubulaire (1) est finalement amené à une configuration suivante pour la finition d'un essieu arrière à bras de suspension longitudinaux combinés.

2. Procédé selon la revendication 1, dans lequel, pour la fabrication du profilé tubulaire (1) adapté à support transversal, on prépare un tube en un matériau de qualité C15.

3. Procédé selon la revendication 1 ou 2, dans lequel les tronçons de transition (b) traités à chaud sont soumis à un grenaillage, en particulier avec des billes en acier, et consolidés au niveau de la surface extérieure (10).
